# EUROPÄISCHE PATENTSCHRIFT

(11) **EP 1 334 867 B1**
(45) Veröffentlichungstag und Bekanntmachung des Hinweises auf die Patenterteilung: **15.09.2004**
(21) Anmeldenummer: 03002351.9
(22) Anmeldetag: 04.02.2003
(51) Int. Cl.: B60N 2/20

(54) **Beschlag für einen Fahrzeugsitz**
Hinge for a vehicle seat
Articulation pour un siège de véhicule

(30) Priorität: 11.02.2002 DE 10206302
(43) Veröffentlichungstag der Anmeldung: 13.08.2003
(73) Patentinhaber: KEIPER GmbH & Co. KG, 67657 Kaiserslautern (DE)
(72) Erfinder: Stilleke, Martin, 45657 Recklinghausen (DE); Lehmann, Ulrich, 53347 Alfter-Bonn (DE)
(74) Vertreter: Patentanwälte Hosenthien-Held und Dr. Held

(56) Entgegenhaltungen:
- DE-A- 3 828 659
- DE-A- 19 913 432
- FR-A- 2 494 574
- GB-A- 2 358 132

## Beschreibung

Die Erfindung betrifft einen Beschlag für einen Fahrzeugsitz, insbesondere für einen Kraftfahrzeugsitz, mit den Merkmalen des Oberbegriffs des Anspruches 1.

Ein solcher Beschlog ist bekannt aus DE 199 13 432.

Ein bekannter Beschlag dieser Art für ein zweitüriges Kraftfahrzeug dient dazu, durch das vorwärts erfolgende Freischwenken der Lehne den Zugang zum Fond zu ermöglichen und für den Gebrauch durch einen Insassen verschiedene Neigungseinstellungen der Lehne zur Verfügung zu stellen. Bei bestimmten Konstellationen, beispielsweise bei einer zu starken Polsterung im Übergangsbereich zwischen der Lehne und dem Sitzteil, kann beim Freischwenken das Problem auftreten, daß die Lehne manuell oder durch anderweitigen Körpereinsatz in der freigeschwenkten Stellung gehalten werden muß, um ein ungewolltes Zurückschwenken zu verhindern.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Dadurch, daß in einer freigeschwenkten Stellung der Lehne das Freischwenkteil am Unterteil festlegbar ist, kann die Lehne in der freigeschwenkten Stellung so gesichert werden, daß kein ungewolltes Zurückschwenken aufgrund einer Polsterpressung oder einer Parkposition bergaufwärts erfolgt. Dies erleichtert den Zugang zum Fond und erhöht den Bedienkomfort, da die Lehne nicht mehr manuell in der freigeschwenkten Stellung gehalten werden muß. Der Begriff "Festlegen" soll in diesem Zusammenhang auch lösbare Sicherungen/Verbindungen umfassen, die nur in eine Richtung formschlüssig und ansonsten durch Vorspannungen oder dergleichen in der festgelegten Position gehalten werden. Unter "Freischwenken" im weiteren Sinne soll auch der Übergang in eine Tischstellung fallen. Durch die Verbindung mit dem Unterteil erfolgt die Sicherung der Lehne in einer Stellung, die von der zuvor eingestellten Neigung der Lehne unabhängig oder zumindest nahezu unabhängig ist. Die Schlitz-Zapfen-Führung gleicht dabei eine mögliche Taumelbewegung des Oberteils eines solchen Beschlags aus, der für die Neigungseinstellung als Getriebebeschlags ausgebildet ist. Ohne die erfindungsgemäße Ausbildung könnte beispielsweise der unbelastete Beifahrersitz aufgrund des durch die Taumelbewegung je nach Lehnenneigung erzeugten Abstandes des Sicherungselementes und eines unterteilfesten Gegenelementes klappern, falls keine Polsterpressung vorhanden ist. Die Schlitz-Zapfen-Führung dient dazu, den Abstand zu minimieren. Ein Vorspannen des Sicherungselementes gegen einen Anschlag des Unterteils, beispielsweise mittels einer Feder oder der gegebenenfalls vorhandenen Polsterpressung, um das Sicherungselement in einer definierten Position relativ zum Unterteil zu halten, ist daher nicht notwendig, was die Anzahl der Bauteile gering hält bzw. den Beschlag unabhängig von zufälligen Einflüssen macht.

In einer einfach herzustellenden Ausführung ist das Sicherungselement als Sicherungsring ausgebildet, welcher die Schwenkachse des Freischwenkteils umrundet, d.h. vorzugsweise ebenso wie das Freischwenkteil am Oberteil lose gelagert ist. Die Schlitz-Zapfen-Führung fixiert dann vorzugsweise den Sicherungsring in Umfangsrichtung, so daß im Falle einer Sicherung des Freischwenkteils mittels einer schwenkbaren Sicherungsklinke, welche zum Festlegen des Freischwenkteils in der freigeschwenkten Stellung der Lehne mit einem Absatz des Sicherungsrings zusammenwirkt, die Position dieses vorzugsweise in unmittelbarer Nähe der Schlitz-Zapfen-Führung vorgesehenes Absatzes unabhängig von der Neigungseinstellung der Lehne ist, obwohl der Sicherungsring am Oberteil gelagert ist.

Eine einfach herzustellende und einfach zu montierende Ausführung der Schlitz-Zapfen-Führung weist als Schlitz eine nach außen geöffnete Aufnahme, welche vorzugsweise in radialer Richtung des Sicherungsrings verläuft, um die Ausgleichsbewegung der Taumelbewegung ohne Komponente in Umfangsrichtung durchführen zu können, und als Zapfen einen Vorsprung auf, der beispielsweise von einem unterteilfesten Adapter ausgestellt ist.

Die Erfindung ist vorzugsweise bei Fahrzeugsitzen von zweitürigen Kraftfahrzeugen mit zentrischem Freischwenken der Lehne einsetzbar, kann aber auch für andere Fahrzeugsitze verwendet werden. Bei einer Verwendung des erfindungsgemäßen Beschlags zur Aktivierung der sogenannten "Easy-Entry-Funktion", bei welcher außer einem Freischwenken der Lehne zugleich noch eine Längsverschiebung des Fahrzeugsitzes erfolgt, hat die Erfindung den Vorteil, daß die Lehne beim Vor- und Zurückschieben des Fahrzeugsitzes in der Freischwenkstellung gehalten wird und daher kein ungewolltes Zurückschwenken möglich ist, bei welchem die Sitzschienen in der momentanen Sitzposition statt in der Memory-Position verriegeln würden (ungewollter Reset).

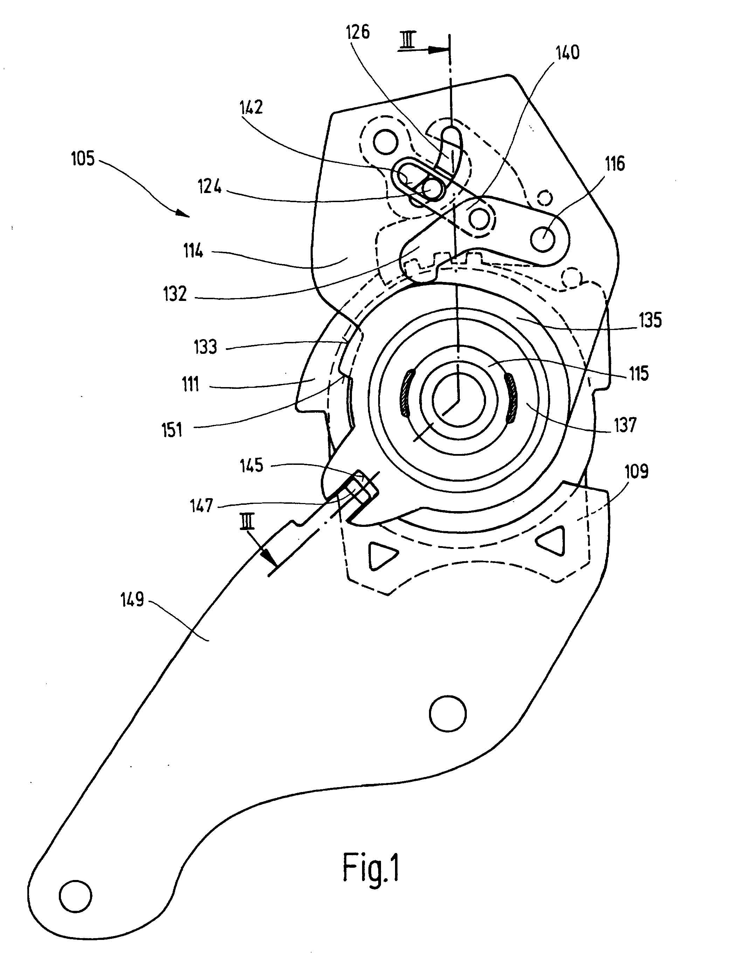

Im folgenden ist die Erfindung anhand eines in der Zeichnung dargestellten Ausführungsbeispiels näher erläutert. Es zeigen
- Fig. 1: eine Seitenansicht des Ausführungsbeispiels in einer Gebrauchsstellung,

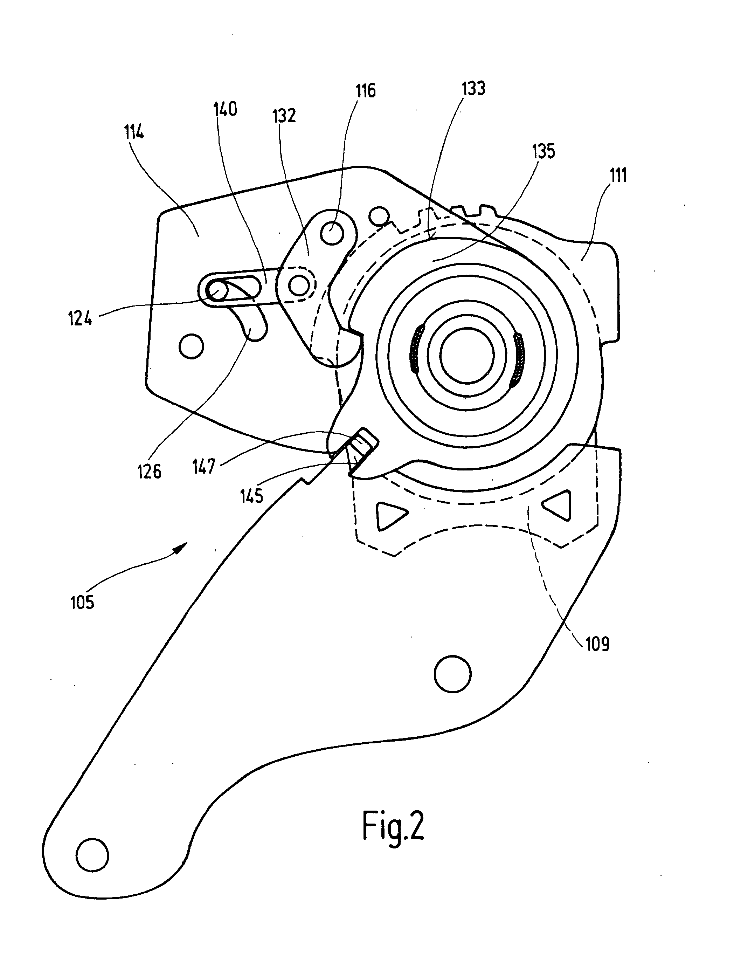

- Fig. 2: eine Ansicht entsprechend Fig. 1 in einer freigeschwenkten Stellung,

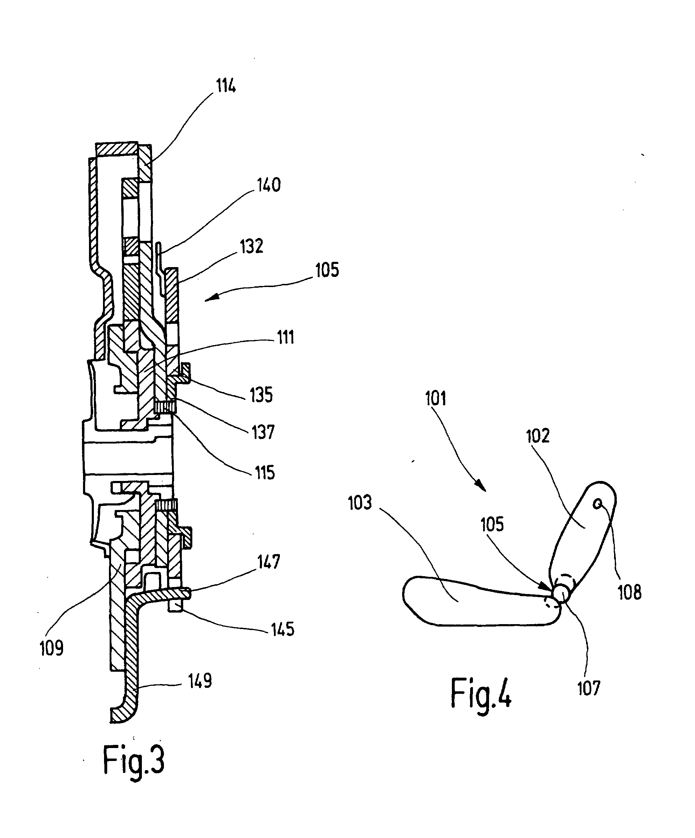

- Fig. 3: einen Schnitt entlang der Linie III-III in Fig. 1, und
- Fig. 4: eine schematische Seitenansicht eines Fahrzeugsitzes.

Ein Fahrzeugsitz 101 für ein zweitüriges Kraftfahrzeug weist für die Neigungseinstellung und das Freischwenken seiner Lehne 102 relativ zu seinem Sitzteil 103 auf seinen beiden Seiten je einen Beschlag 105 auf. Für die Neigungseinstellung zwischen mehreren Gebrauchsstellungen der Lehne 102 ist der Beschlag 105 als ein Getriebebeschlag ausgebildet, welcher im folgenden als Taumelbeschlag bezeichnet ist. Auf der Außenseite des Fahrzeugsitzes 101 ist für diese Neigungseinstellfunktion an einem der Beschläge 105 ein Handrad 107 vorgesehen, während für die Freischwenkfunktion an der Lehne 102 ein Handhebel 108 beweglich angebracht ist. Jeder Beschlag 105 umfaßt ein mit der Struktur des Sitzteils 103 verbundenes Taumelunterteil 109, ein zur Neigungseinstellung der Lehne 102 relativ zu diesem verdrehbares Taumeloberteil 111 und ein mit der Lehnenstruktur der Lehne 102 verbundenes Freischwenkteil 114.

Das Freischwenkteil 114 ist auf einem vom Taumelunterteil 109 abgewandten, auf einen ringförmigen Absatz des Taumeloberteils 111 gepressten Lagerring 115 gelagert und für das zentrisch erfolgende Freischwenken relativ zum Taumeloberteil 111 um eine zentrale Achse dieses Lagerrings 115 verschwenkbar, ansonsten aber mit dem Taumeloberteil 111 verriegelt. Hierzu ist auf dem Freischwenkteil 114 in an sich bekannter Weise auf einem Lagerbolzen 116 eine Sperrklinke schwenkbar gelagert, welche in Schließrichtung federbelastet in einen Zahnabschnitt des Taumeloberteils 111 greift und dabei durch einen federbelasteten Spannexzenter gesichert wird. Ein seitlich vom Spannexzenter abstehender Entriegelungsbolzen 124 greift durch eine gekrümmte Kulisse 126 des Freischwenkteils 114. Ein mit dem Handhebel 108 in Wirkverbindung stehender Seilzug ist am Entriegelungsbolzen 124 befestigt. Zum Entriegeln des Freischwenkteils 114 wird über den Seilzug der Entriegelungsbolzen 124 innerhalb der Kulisse 126 geschwenkt, welcher dabei den Spannexzenter mitnimmt, der die Sperrklinke freigibt.

Auf dem Lagerbolzen 116 ist zusätzlich eine Sicherungsklinke 132 schwenkbar gelagert, welche federbelastet an einer Steuerkurve 133 anliegt, welche auf der Außenfläche eines Sicherungsrings 135 ausgebildet ist. Der Sicherungsring 135 ist in einer Ebene parallel zum Freischwenkteil 114 und zum Taumeloberteil 111 lose auf einem axial verlaufenden Teil eines Doppelflanschrings 137 gelagert. Der Doppelflanschring 137 sitzt mit seinem inneren Flansch auf dem Lagerring 115 des Taumeloberteils 111 und ist mit diesem Lagerring 115 verschweißt, wobei er zugleich das Freischwenkteil 114 in axialer Richtung sichert. Mit seinem äußeren Flansch hintergreift der Doppelflanschring 137 den Sicherungsring 135 und sichert diesen in axialer Richtung unter Zwischenlage eines Federstahlelementes zur Spielfreistellung. An der Sicherungsklinke 132 ist exzentrisch bezüglich des Lagerbolzens 116 eine Koppel 140 angelenkt, welche mittels eines Langlochs 142 in der Art einer Schlitz-Zapfen-Führung den Entriegelungsbolzen 124 umschließt. Das Langloch 142 hat den Zweck, einen Leerhub für eine zeitlich versetzte Bewegung des Spannexzenters und der Sicherungsklinke 132 zur Verfügung zu stellen.

Am Sicherungsring 135 ist eine sich in radialer Richtung öffnende, von einer gabelförmigen Materialpartie definierte Aufnahme 145 ausgebildet, welche unter Bildung einer Schlitz-Zapfen-Führung einen Vorsprung 147 aufnimmt, der von einem mit dem Taumelunterteil 109 verschweißten Adapter 149 absteht. Der Adapter 149 bildet die Anbindung des Taumelunterteils 109 an die Struktur des Sitzteils 103. Die Anordnung des Sicherungsrings 135 ist insofern nahezu unabhängig von der eingestellten Neigung der Lehne 102, daß die bei der Neigungseinstellung der Lehne 102 auftretende Taumelbewegung des Taumeloberteils 111 - und damit der Lagerung des Sicherungsrings 135 - relativ zum Taumelunterteil 109 im Bereich der Aufnahme 145 auf eine Relativbewegung der Aufnahme 145 und des Vorsprungs 147 reduziert und im übrigen in Umfangsrichtung durch die lose Lagerung des Sicherungsrings 135 auf dem Doppelflanschring 137 ausgeglichen wird. Der Sicherungsring 135 ist durch diese spezielle Lagerung und Führung im Bereich der Schlitz-Zapfen-Führung in Umfangsrichtung fixiert.

Im verriegelten Zustand des Beschlags 105 liegt die Sicherungsklinke 132 an einem Abschnitt des Sicherungsrings 135 an, dessen Radius in Freischwenkrichtung anwächst, wobei die genaue Position der Anlagestelle von der eingestellten Neigung der Lehne 102 abhängt. Beim Freischwenken der Lehne 102, welches durch das Entriegeln des Freischwenkteils 114 eingeleitet wird, gelangt die Sicherungsklinke 132 auf einen radial näherungsweise konstant bleibenden Abschnitt der Steuerkurve 133 des Sicherungsrings 135 und bei Erreichen der freigeschwenkten Stellung der Lehne 102 über einen radial zurückspringenden Absatz 151 in der Nähe der Aufnahme 145 auf einen radial weiter innen gelegenen Abschnitt der Steuerkurve 133 des Sicherungsrings 135. Die federbelastete Sicherungsklinke 132 hintergreift nun den Sicherungsring 135, wodurch die freigeschwenkte Stellung der Lehne 102, welche einen ungehinderten Zugang zum Fond erlaubt, durch diese Teilverriegelung des Beschlags 105 gesichert ist. Die Rückkehr in die zuvor eingenommene Gebrauchsstellung der Lehne 102 erfolgt entsprechend im umgekehrter Reihenfolge, wobei das Freischwenkteil 114 aufgrund von Federvorspannungen selbsttätig verriegelt wird.

Da die Position des Absatzes 151 durch die Fixierung des Sicherungsrings 135 in Umfangsrichtung im Bereich der Schlitz-Zapfen-Führung und durch die Nähe der Schltz-Zapfen-Führung zum Absatz 151 nahezu konstant ist bezüglich der Position des Taumelunterteils 109 und dessen Adapter 149, wird das Freischwenkteil 114 - und damit die Lehne 102 - immer in der gleichen Position relativ zum Taumelunterteil 109 - und damit zum Sitzteil 103 - gesichert, also unabhängig von der eingestellten Neigung der Lehne 102.

### Bezugszeichenliste

- 101: Fahrzeugsitz
- 102: Lehne
- 103: Sitzteil
- 105: Beschlag
- 107: Handrad
- 108: Handhebel
- 109: Taumelunterteil
- 111: Taumeloberteil
- 114: Freischwenkteil
- 115: Lagerring
- 116: Lagerbolzen
- 124: Entriegelungsbolzen
- 126: Kulisse
- 132: Sicherungsklinke
- 133: Steuerkurve
- 135: Sicherungsring, Sicherungselement
- 137: Doppelflanschring
- 140: Koppel
- 142: Langloch
- 145: Aufnahme
- 147: Vorsprung
- 149: Adapter
- 151: Absatz

## Patentansprüche

1. Beschlag für einen Fahrzeugsitz, insbesondere für einen Kraftfahrzeugsitz, mit einem an der Sitzteilstrukturbefestigbaren Unterteil (109), einem relativ zum Unterteil (109) verdrehbaren Oberteil (111) für die Neigungseinstellung der Lehne (102) des Fahrzeugsitzes (101) zwischen mehreren Gebrauchsstellungen, und einem an der Lehnenstrukturbefestigbaren, mit dem Oberteil (111) verriegelbaren und für ein zentrisches Freischwenken der Lehne (102) relativ zum Oberteil (111)verschwenkbaren Freischwenkteil (114), wobei in einer freigeschwenkten Stellung des Oberteils (111) das Freischwenkteil (114) an einem Sicherungselement (135) festlegbar ist, welches am Oberteil (111) gelagert ist, **dadurch gekennzeichnet daß** das Sicherungselement (135) über eine Schlitz-Zapfen-Führung (145, 147) mit dem Unterteil (109) verbunden ist.

2. Beschlag nach Anspruch 1, **dadurch gekennzeichnet, daß** das Sicherungselement als Sicherungsring (135) ausgebildet ist, welcher die Schwenkachse des Freischwenkteils (114) umrundet.

3. Beschlag nach Anspruch 2, **dadurch gekennzeichnet, daß** die Schlitz-Zapfen-Führung (145, 147) den Sicherungsring (135) in Umfangsrichtung fixiert.

4. Beschlag nach Anspruch 2 oder 3, **dadurch gekennzeichnet, daß** am Freischwenkteil (114) eine schwenkbare Sicherungsklinke (132) gelagert ist, welche zum Festlegen des Freischwenkteils (114) in der freigeschwenkten Stellung der Lehne (102) mit einem Absatz (151) des Sicherungsrings (135) zusammenwirkt.

5. Beschlag nach Anspruch 4, **dadurch gekennzeichnet, daß** der Absatz (151) in der Nähe der Schlitz-Zapfen-Führung (145, 147) vorgesehen ist.

6. Beschlag nach Anspruch 4 oder 5, **dadurch gekennzeichnet, daß** das mit dem Oberteil (111) verriegelte Freischwenkteil (114) mittels eines Entriegelungsbolzens (124) entriegelbar ist, wobei zwischen dem Entriegelungsbolzen (124) und der Sicherungsklinke (132) eine Koppel (136) vorgesehen ist.

7. Beschlag nach einem der Ansprüche 2 bis 6, **dadurch gekennzeichnet, daß** der Schlitz (145) der Schlitz-Zapfen-Führung (145, 147) in radialer Richtung des Sicherungsrings (135) verläuft.

8. Beschlag nach einem der Ansprüche 1 bis 7, **dadurch gekennzeichnet, daß** der Schlitz der Schlitz-Zapfen-Führung (145, 147) als nach außen geöffnete Aufnahme (145) ausgebildet ist.

9. Beschlag nach einem der Ansprüche 1 bis 8, **dadurch gekennzeichnet, daß** der Zapfen der Schlitz-Zapfen-Führung (145, 147) als Vorsprung (147) am Unterteil (109) oder einem unterteilfesten Adapter (149) ausgebildet ist.

10. Fahrzeugsitz (101) mit einer Lehne (102), **gekennzeichnet durch** einen Beschlag (105) nach einem der Ansprüche 1 bis 9 zur Neigungseinstellung und zum Freischwenken der Lehne (102).

## Claims

1. A fitting for a vehicle seat, especially for a motor vehicle seat, comprising a lower part (109) which can be fastened to the sitting part structure, an upper part (111) which is rotatable relative to the lower part (109) to adjust the inclination of the backrest (102) of the vehicle seat (101) between a plurality of use positions, and a freely pivoting part (114) which can be fastened to the backrest structure and can be locked to the upper part (111) and which, for centric free pivoting of the backrest (102), is rotatable relative to the upper part (111), wherein, in a freely pivoted position of the upper part (111), the freely pivoting part (114) can be fixed against a securing element (135) which is mounted on the upper part (111), **characterised in that** the securing element (135) is connected to the lower part (109) *via* a slot-and-tenon guide (145, 147).

2. A fitting according to claim 1, **characterised in that** the securing element is constructed as a securing ring (135) which encircles the pivot axis of the freely pivoting part (114).

3. A fitting according to claim 2, **characterised in that** the slot-and-tenon guide (145, 147) fixes the securing ring (135) in the circumferential direction.

4. A fitting according to claim 2 or 3, **characterised in that** a pivoting securing pawl (132) is mounted on the freely pivoting part (114), which securing pawl (132) co-operates with a shoulder (151) of the securing ring (135) to fix the freely pivoting part (114) in the freely pivoted position of the backrest (102).

5. A fitting according to claim 4, **characterised in that** the shoulder (151) is provided in the vicinity of the slot-and-tenon guide (145, 147).

6. A fitting according to claim 4 or 5, **characterised in that** the freely pivoting part (114), when locked to the upper part (111), can be unlocked by means of an unlocking pin (124), a coupler (136) being provided between the unlocking pin (124) and the securing pawl (132).

7. A fitting according to any one of claims 2 to 6, **characterised in that** the slot (145) of the slot-and-tenon guide (145, 147) extends in the radial direction of the securing ring (135).

8. A fitting according to any one of claims 1 to 7, **characterised in that** the slot of the slot-and-tenon guide (145, 147) is constructed as a receptacle (145) that is open towards the outside.

9. A fitting according to any one of claims 1 to 8, **characterised in that** the tenon of the slot-and-tenon guide (145, 147) is constructed as a projection (147) on the lower part (109) or on an adapter (149) fixed to the lower part.

10. A vehicle seat (101) having a backrest (102), **characterised by** a fitting (105) according to any one of claims 1 to 9 for adjusting the inclination of and freely pivoting the backrest (102).

## Revendications

1. Ferrure pour un siège de véhicule, en particulier pour un siège de véhicule automobile, comprenant une partie inférieure (109) pouvant être fixée à la structure de partie de siège, une partie supérieure (111) qu'on peut faire tourner par rapport à la partie inférieure (109) pour le réglage de l'inclinaison du dossier (102) du siège de véhicule (101) entre plusieurs positions d'utilisation, et une partie à basculement libre (114) pouvant être fixée à la structure de dossier, être verrouillée avec la partie supérieure (111) et être basculée par rapport à la partie supérieure (111) pour un basculement libre centré du dossier (102), dans lequel, dans une position basculée librement de la partie supérieure (111), la partie à basculement libre (114) peut être fixée à un élément de blocage (135) qui est tourillonné sur la partie supérieure (111), **caractérisée par le fait que** l'élément de blocage (135) est relié à la partie inférieure (109) au moyen d'un guidage à fente et tourillon (145, 147).

2. Ferrure selon la revendication 1, **caractérisée par le fait que** l'élément de blocage est constitué par une bague de blocage (135) qui entoure l'axe de basculement de la partie à basculement libre (114).

3. Ferrure selon la revendication 2, **caractérisée par le fait que** le guidage à fente et tourillon (145, 147) immobilise la bague de blocage (135) dans la direction circonférentielle.

4. Ferrure selon l'une des revendications 2 ou 3, **caractérisée par le fait que**, sur la partie à basculement libre (114) est tourillonné un cliquet de .blocage (132) pivotant qui coopère avec un épaulement (151) de la bague de blocage (135) pour bloquer la partie à basculement libre (114) dans la position basculée librement du dossier (102).

5. Ferrure selon la revendication 4, **caractérisée par le fait que** l'épaulement (151) est prévu à proximité du guidage à fente et tourillon (145, 147).

6. Ferrure selon l'une des revendications 4 ou 5, **caractérisée par le fait que** la partie à basculement libre (114) verrouillée avec la partie supérieure (111) peut être déverrouillée au moyen d'un doigt de déverrouillage (124), une biellette (136) étant prévue entre le doigt de déverrouillage (124) et le cliquet de blocage (132).

7. Ferrure selon l'une des revendications 2 à 6, **caractérisée par le fait que** la fente (145) du guidage à fente et tourillon (145, 147) s'étend dans une direction radiale de la bague de blocage (135).

8. Ferrure selon l'une des revendications 1 à 7, **caractérisée par le fait que** la fente du guidage à fente et tourillon (145, 147) forme un logement (145) ouvert vers l'extérieur.

9. Ferrure selon l'une des revendications 1 à 8,
**caractérisée par le fait que** le tourillon du guidage à fente et tourillon (145, 147) est constitué par une saillie (147) de la partie inférieure (109) ou d'un adaptateur (149) solidaire de la partie inférieure.

10. Siège de véhicule (101) muni d'un dossier (102), **caractérisé par** une ferrure (105) telle que définie à l'une des revendications 1 à 9 pour le réglage de l'inclinaison et pour le basculement libre du dossier (102).
